# EUROPEAN PATENT APPLICATION

(11) **EP 4 205 930 A1**
(43) Date of publication of application: **05.07.2023**
(21) Application number: 21952664.7
(22) Date of filing: 03.08.2021
(51) Int. Cl.: B28D 1/22, B28D 7/04, C03B 33/02, C03B 33/12

(54) **GUIDING DEVICE FOR LARGE-FORMAT MANUAL CUTTERS**

(71) Applicant: Germans Boada, S.A., 08191 Rubi (Barcelona) (ES)
(72) Inventor: MARTINEZ GALINDO, David, 08191 Rubi (Barcelona) (ES)
(74) Representative: Maldonado Jordan, Julia
(86) International application number: PCT/ES2021/070586
(87) International publication number: WO 2023/012380

(57) **Abstract**

The present invention relates to a guiding device for large-format manual cutters, said device consisting of a guide (1) that comprises: on its top surface (11) an intermediate recessed portion (111) delimited by a base (112) and by longitudinal rails (113a, 113b) for movement of a manual cutter (3); and, on opposite sides of its bottom surface, first support means (121, 122) for supporting the guide (1) on the part (P) to be cut and a longitudinal recess (123) for receiving lever suction cups (2) which form second means for supporting and securing the guide (1) on the part (P) to be cut. The longitudinal rails (113a, 113b)are arranged between the first and the second support means; and the first support means (121, 122) are arranged between the cutting tool (31) and the suction cups (2) which form the second support means.

## Description

### Technical field.

The present invention relates to a guiding device for large-format manual cutters, which comprises a guide with suction cups for securing thereof on a large-format part to be cut, for example ceramic or glass, and which is suitable for the longitudinal movement of a manual cutter provided with a drive handle for driving a tool for marking a break line on the part to be cut.

### Prior state of the art

There is currently a type of guiding device on the market for large-format manual cutters that has on its top surface rails slidingly coupled to the head of the cutter, and at least one suction cup, attached to the bottom surface of said longitudinal guide and suitable for adhering to the large-format part to be cut.

A guide of this type, described in European patent EP3415473A1, is characterised in that the sliding rails of the head are arranged on opposite sides with respect to a median plane of the suction cup, perpendicular to the surface for contacting and securing said suction cup to the part to cut; said guide comprising two points of contact with the part to be cut, arranged on either side of the suction cup; this reduces the degrees of freedom of the guide assembly and causes the suction cup to not make good direct contact against the part to be cut during use; so that when the suction cup is activated, the vacuum is not adequate because it is not completely in contact with the part to be cut and it does not provide a good grip on the guide, which implies a low cutting accuracy, a limitation of the force to be applied on the cutting tool and, therefore, a limited ability of said tool to penetrate the part to be cut during the scraping process.

Additionally, it is worth mentioning that the securement of the suction cup to the guide by means of any intermediate connection component causes said guide to not be sufficiently rigid and to rise or swing laterally with any reaction force produced during the scraping process of the part to be cut.

Therefore, the technical problem that arises is the development of a guiding device for large-format manual cutters that provides a more rigid connection with respect to the part to be cut.

### Description of the invention

The guiding device for large-format manual cutters that is the object of this invention exhibits technical features aimed at improving its securement with respect to the part to be cut, an additional objective of the invention being that of providing said guiding device with a modular configuration that allows successive guide segments to be coupled to reach the desired length and disassemble them to facilitate their transport.

The proposed solution consists of providing a support in the guide on the part to be cut, and a second support point is directly the rubber of the suction cup, which means that, once the guide is placed, the suction cup is totally in contact with the entire surface of the part to be cut.

This means that, when the suction cup is activated, the vacuum effect is much better and, therefore, its gripping force increases considerably, allowing it to withstand greater reaction forces to the guide during the scraping process, improving the penetration of the cutting tool into the part to be cut.

According to the invention, this guiding device comprises an extruded aluminium guide, having a constant cross-section in the longitudinal direction, and comprising:
- a top surface that has: an intermediate recessed portion that covers the entire length of the guide and that is delimited by a base and by facing lateral surfaces which form longitudinal rails for movement of rolling means of a manual cutter provided with a cutting tool arranged on one side of the guide; and two lateral portions (114, 115) on either side of said intermediate portion;
- a bottom surface that has on a first side of the guide first vertical support means of the guide on the part to be cut and, on a second side of the guide, a longitudinal recess for receiving lever suction cups which form seconds means for supporting and securing the guide on the part to be cut and,
- hollow chambers located between said top and bottom surfaces and separated by reinforcing ribs;
so that the longitudinal rails for movement of the cutter are arranged between the first means and the securing suction cups, and the first support means are arranged between the cutting tool and the suction cups which form the second support means.

In this guiding device, the body of the suction cup is implemented in the same aluminium guide of the manual cutter, which allows a more rigid connection and, as it is closer to the reaction force caused by the cutting tool against the part to be cut, contributes to the fact that the guide does not rise due to the action of the torsion moment that said reaction force creates, and a greater penetration force of the cutting tool can be applied to the part to be cut.

The guide comprises on its second side, that is to say, on the side furthest from the marking area of the cutting tool, slots that are longitudinally aligned and in correspondence with the vertical median plane of the longitudinal recess for receiving the suction cups; rods being housed in said slots, with the possibility of movement, rods which are coupled to levers for driving and locking said suction cups; the aforementioned drive levers protruding above the guide.

The aforementioned slots allow the distance between the suction cups to be adjusted, increasing the possibilities of securing the guide on parts to be cut of different sizes and geometries.

Advantageously, the first support means for supporting the guide on the part to be cut comprise at least one bottom appendage, provided with a longitudinal lip made of elastomer or anti-slip material, coplanar with the securement surface for securing the suction cups to the part to be cut, and arranged in an area close to the tool of the cutter.

In order to increase the versatility of the guiding device, the body of the guide is preferably made up of removable guide segments, comprising longitudinal holes at their opposite ends, close to the first and second sides of the guide, in which coupling pins are housed that guarantee their alignment in the coupling position; and securing means for securing the successive guide segments in said coupling position.

According to the invention, said securing means for securing the successive guide segments comprise a hook and a lever lock couplable to said hook, secured on the base of the intermediate recessed portion of the guide.

The arrangement of said securing means on the base of said recessed portion allows said levers, in the securement position, not to constitute an obstacle for the movement of the cutter along the guide rails, which passes above said securing means.

Both the securing of the suction cups and the driving of the securing means for securing the successive segments of the guide is manually performed, simply by applying pressure on the corresponding levers, making unnecessary the use of tools for joining and securing the successive segments of the guide and secure the guide to the part to be cut by means of the suction cups.

### Brief description of the contents of the drawings.

As a complement to the description provided herein, and for the purpose of helping to make the features of the invention more readily understandable, the present specification is accompanied by a set of drawings which, by way of illustration and not limitation, represent the following:
- Figure 1 shows a partial perspective view of an exemplary embodiment of the guiding device for large-format cutters, according to the invention.
- Figure 2 shows a profile view of the device of the previous figure, secured on a large-format part to be cut.
- Figure 3 shows a view similar to the previous one in which a manual cutter mounted on the guiding device of the invention has been represented.
- Figure 4 shows a partial perspective view of two aligned and disassembled guide segments.
- Figure 5 shows a perspective view of one of the guide segments which form the guide.

### Detailed description of embodiments of the invention.

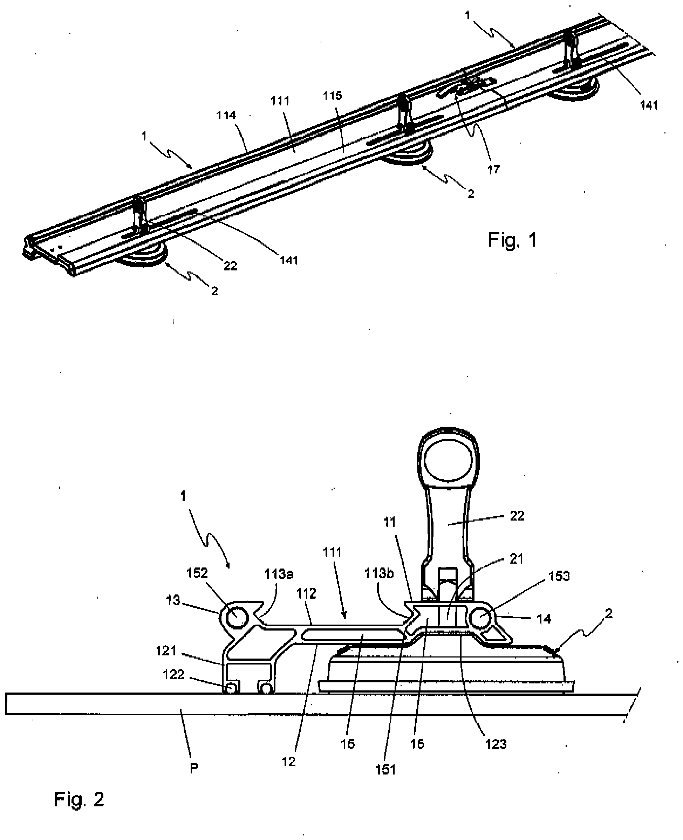

The guiding device of the invention has been represented in Figure 1, comprising an extruded aluminium guide (1) made up of two guide segments (1a, 1b) attached together by means of securing means (17) and on which lever suction cups (2) are mounted for securing same on the large-format part (P) to be cut.

As shown in Figure 2, the guide (1) comprises a top surface (11) and a bottom surface (12) between which hollow chambers (15) separated by reinforcing ribs (151) are defined.

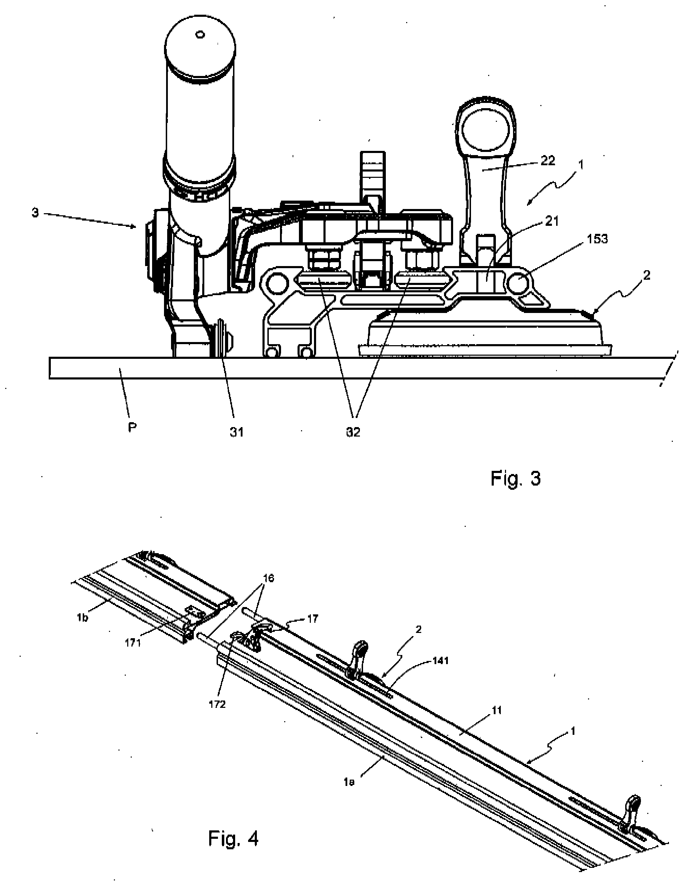

The top surface (11) comprises an intermediate recessed portion (111), provided with a base (112) and laterally delimited by surfaces which form mutually facing longitudinal rails (113a, 113b) for the movement of rolling means (32) of a manual cutter (3) represented in Figure 3 and provided with a cutting tool (31) for the marking of a break line on the part (P) to be cut; so that the rolling means (32) are located within the intermediate recessed portion (111).

The bottom surface (12) of the guide (1) has on a first side (13) first means (121, 122) for support on the part (P) to be cut, and on a second side (14) a longitudinal recess (123) for receiving the suction cups (2) which form second means for supporting and securing the guide (1) on the part (P) to be cut.

As can be seen in figures 2 and 3, the longitudinal rails (113a, 113b) for the movement of the cutter are located between the first support means (121, 122) and the suction cups (2) which form the second support means of the guide on the part (P) to be cut.

The first support means (121, 122) are made up of bottom appendages (121) of the aluminium guide, internally provided with respective longitudinal lips (122) of an elastomer or anti-slip material, coplanar with the securement surface for securing the suction cups (2) to the part (P) to be cut.

The guide (1) has on the second side (14) slots (141) that are longitudinally aligned and in correspondence with the vertical median plane of the longitudinal recess (123) for the longitudinal reception of the suction cups (2), rods (21) being housed in said slots (141) rods which are coupled to levers (22) for driving and locking the suction cups with respect to the part (P) to be cut. The aforementioned levers (22) are arranged above the guide (1).

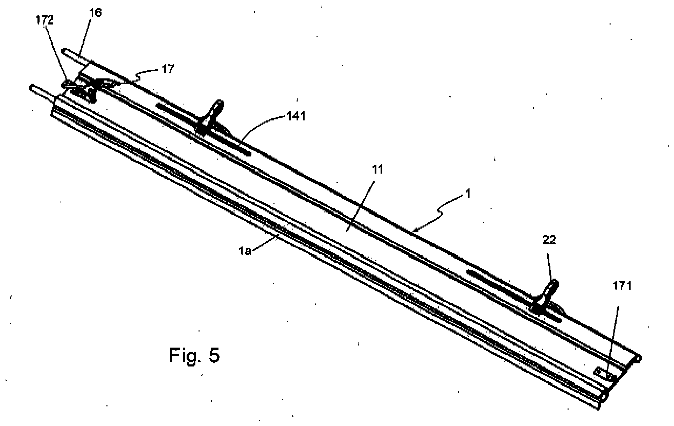

The guide segments (1a, 1b) which form the body of the guide (1) have longitudinal holes (152, 153) referenced in Figure 2 at the opposite ends, close to the first and to the second sides (13, 14) of the guide (1) and, in which coupling pins (16) visible and referenced in figures 4 and 5 are housed.

The securing means (17) for securing the successive guide segments (1a, 1b) in the coupling position, comprise a hook (171) and a lever lock (172) secured on the base (112) of the intermediate recessed portion (111) of the top surface of the guide. Said securing means (17) can be operated simply by pressing, once the lever lock (172) has been hooked on the hook (171).

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A guiding device for large-format manual cutters, comprising: an extruded aluminium guide (1), having a constant cross-section in the longitudinal direction and comprising:
- a top surface (11) comprising: an intermediate recessed portion (111) that covers the entire length of the guide and is delimited by a base (112) and by facing lateral surfaces which form longitudinal rails (113a, 113b) for movement of rolling means (32) of a manual cutter (3) provided with a cutting tool (31) arranged on one side of the guide (1); and two lateral portions (114, 115) located on either side of said intermediate portion (111);
- a bottom surface (12) which has on a first side (13) of the guide first vertical support means (121, 122) of the guide (1) on the part (P) to be cut and on a second side (14) of the guide a longitudinal recess (123) for receiving lever suction cups (2) which form second means for supporting and securing the guide (1) on the part (P) to be cut and
- hollow chambers (15) located between said top and bottom surfaces and separated by reinforcing ribs (151);
so that the longitudinal rails (113a, 113b) for movement of the cutter are arranged between the first means (121, 122) and the lever suction cups (2), and the first support means (121, 122) are arranged between the cutting tool (31) and the lever suction cups (2) which form the second support means.

2. The guiding device, according to claim 1, **characterised in that** it comprises on the second side (14) of the guide (1) slots (141), that are longitudinally aligned and in correspondence with the vertical median plane of the longitudinal recess (123) for receiving the lever suction cups (2), in which rods (21) are housed with the possibility of movement, coupled to levers (22), for driving and locking the lever suction cups (2), arranged above the guide (1).

3. The guiding device, according to any of the preceding claims, **characterised in that** the first support means (121, 122) of the guide (1) on the part to be cut comprise at least one bottom appendage (121) provided with a longitudinal lip (122), made of elastomer or non-slip material, coplanar with the securement surface for securing the lever suction cups (2).

4. The guiding device, according to any of the preceding claims, **characterised in that** the body of the guide (1) is made up of removable guide segments (1a, 1b) which comprise at their opposite ends: respective longitudinal holes (152, 153), close to the first side (13) and to the second side (14), in which coupling pins (16) are housed; and securing means (17) in a coupling position.

5. The guiding device, according to any of the preceding claims, **characterised in that** the securing means (17) for securing the guide segments (1a, 1b) comprise a hook (171) and a lever lock (172), couplable to said hook, secured on the base (112) of the intermediate recessed portion (111) of the top surface (11) of the guide.

## Amended claims

### Amended claims under Art. 19.1 PCT

1. A guiding device for a large-format manual cutter (3) for cutting a large-format part (P), comprising:
- a guide (1) made of extruded aluminium, having a constant cross-section in the longitudinal direction and comprising: a top surface (11), a bottom surface (12), and hollow chambers (15) located between said top and bottom surfaces and separated by reinforcing ribs (151);
- the top surface (11) of the guide (1) comprises: an intermediate recessed portion (111) that covers the entire length of the guide and is delimited by a base (112) and by facing lateral surfaces which form longitudinal rails (113a, 113b); and two lateral portions (114, 115) located on either side of said intermediate portion (111);
- the bottom surface (12) of the guide (1) comprises first vertical support means (121, 122) of the guide (1) on the part (P) to be cut and a longitudinal recess (123) for receiving lever suction cups (2) which form second means for supporting and securing the guide (1) on the part (P) to be cut; and
- the manual cutter (3) comprises rolling means (32) that are movable along the longitudinal rails (113a, 113b) of the guide (1), and a cutting tool (31) arranged on one side of the guide (1);
**characterised in that**:
- the first vertical support means (121, 122) are arranged on a first side (13) of the guide (1) and the longitudinal recess (123) for receiving the lever suction cups (2) is arranged on a second side (14) of the guide (1);
- the longitudinal rails (113a, 113b) of the guide (1) for movement of the manual cutter (3) are arranged between the first vertical support means (121, 122) and the lever suction cups (2); and
- the first vertical support means (121, 122) of the guide (1) are arranged between the cutting tool (31) of the manual cutter (3) and the lever suction cups (2) that make up the second support means of the guide (1).

2. The guiding device, according to claim 1, **characterised in that** it comprises on the second side (14) of the guide (1) slots (141), that are longitudinally aligned and in correspondence with the vertical median plane of the longitudinal recess (123) for receiving the lever suction cups (2), in which rods (21) are housed with the possibility of movement, coupled to levers (22), for driving and locking the lever suction cups (2), arranged above the guide (1).

3. The guiding device, according to any of the preceding claims, **characterised in that** the first support means (121, 122) of the guide (1) on the part to be cut comprise at least one bottom appendage (121) provided with a longitudinal lip (122), made of elastomer or non-slip material, coplanar with the securement surface for securing the lever suction cups (2).

4. The guiding device, according to any of the preceding claims, **characterised in that** the body of the guide (1) is made up of removable guide segments (1a, 1b) which comprise at their opposite ends: respective longitudinal holes (152, 153), close to the first side (13) and to the second side (14), in which coupling pins (16) are housed; and securing means (17) in a coupling position.

5. The guiding device, according to any of the preceding claims, **characterised in that** the securing means (17) for securing the guide segments (1a, 1b) comprise a hook (171) and a lever lock (172), couplable to said hook, secured on the base (112) of the intermediate recessed portion (111) of the top surface (11) of the guide.
